# FASCICULE DE BREVET EUROPEEN

(11) **EP 0 427 596 B1**
(45) Date de publication et mention de la délivrance du brevet: **10.05.1995**
(21) Numéro de dépôt: 90403081.4
(22) Date de dépôt: 31.10.1990
(51) Int. Cl.: E04B 5/36, E04B 1/16

(54) **Isolant thermique et phonique, notamment pour plafond de cave, de parking ou de vide sanitaire et procédé de mise en place d'un tel isolant**
Thermische und Schalisolierung, insbesondere für Decken von Kellern, Parkgaragen oder Kriechraum und Verfahren zu deren Anbringung
Thermal and acoustical insulation, in particular for ceilings of basements, garages or crawlspace and affixing method thereof

(30) Priorité: 07.11.1989 FR 8914573
(43) Date de publication de la demande: 15.05.1991
(73) Titulaire: ISOVER SAINT-GOBAIN, 92400 Courbevoie (FR)
(72) Inventeur: Guilbert, Gérard, F-60600 Clermont (FR); Millet, Alain, F-78860 Saint-Nom-La-Bretèche (FR); Peponnet, Christian, F-78150 Le Chesnay (FR)
(74) Mandataire: Le Vaguerèse, Sylvain Jacques

(56) Documents cités:
- FR-A- 857 262
- FR-A- 2 505 906
- FR-A- 2 586 053

## Description

La présente invention concerne l'isolation thermique et acoustique des premiers planchers d'immeubles d'habitation qui séparent les appartements habités des locaux se trouvant en sous-sol, par exemple les caves, les parkings, les vides sanitaires, ou tous types de locaux bruyants et non chauffés. Dans la construction traditionnelle d'immeubles neufs, pour assurer l'isolation thermique et acoustique de tels planchers, tout en maintenant une bonne résistance au feu, un procédé connu consiste, après avoir érigé les murs, à dresser sur le sol des étais sur lesquels on pose un coffrage en métal ou en contreplaqué. Sur ce coffrage sont ensuite disposés de façon jointive des panneaux en une matière poreuse incombustible, non hydrophile, et ayant de bonnes performances d'isolation thermique et acoustique. Ces panneaux doivent avoir également une bonne résistance à la compression, ce qui est une qualité essentielle compte tenu du fait qu'ils doivent supporter la pression exercée par la dalle de béton, pendant la confection de celle-ci, dont l'épaisseur est de l'ordre de 20 cm.

Ces panneaux sont généralement réalisés en laine de roche ou de verre et se présentent sous forme de plaques rectangulaires, par exemple de dimensions 1,20 x 1 x 0,10 m. On fixe ensuite sur la face supérieure des panneaux et de manière uniformément répartie sur leur surface une pluralité d'éléments destinés à ancrer lesdits panneaux à la dalle de béton qui sera ensuite coulée. Ces éléments d'ancrage peuvent être de forme hélicoïdale ou en tire-bouchons et sont vissés sur une partie de leur longueur dans les panneaux. On met alors en place une armature métallique constituée, par exemple, par un treillis et on coule la dalle en béton. Celui-ci vient s'étaler sur les panneaux et noie dans son épaisseur l'armature et les extrémités libres des éléments d'ancrage. Lorsque la dalle en béton est complètement sèche, on retire les étais et on démonte le coffrage. Les panneaux tiennent alors à la dalle par adhérence et au moyen des éléments d'ancrage.

Un plancher construit selon ce procédé assure une excellente isolation thermique ainsi qu'un bonne résistance au feu. Les spécialistes du bâtiment ont cru, jusqu'à présent, et d'ailleurs les calculs les ont confortés dans leur opinion, qu'un tel revêtement en panneaux isolants améliore également les performances acoustiques de la dalle de béton. En réalité, des essais en laboratoire ont prouvé que, non seulement ces performances ne sont pas améliorées, mais que, de façon surprenante, elles subissent une dégradation de quelques décibels. En effet, l'indice d'affaiblissement acoustique d'une dalle de béton de 22 cm d'épaisseur, mesuré selon la norme NF S 31051, a été trouvé égal à 60 dB(A). On rappelle que dans l'industrie du bâtiment, cet indice est obtenu en traçant la courbe de l'affaiblissement acoustique en fonction de la fréquence dans une gamme de fréquences allant d'environ 100 à 4000 Hz puis en calculant l'indice global par un système de pondération normalisé. L'indice A, indiqué ci-dessus entre parenthèses, désigne justement la norme de pondération utilisée.

En associant à la même dalle de béton un revêtement en sous-face constitué par les panneaux isolants décrits précédemment, on trouve paradoxalement un indice d'affaiblissement normalisé plus faible, soit 56 dB(A). La dégradation par rapport à la dalle de béton seule est donc de 5 dB(A). Les essais ont montré que cette dégradation est surtout marquée aux fréquences basses.

La présente invention a pour but de résoudre ce problème en tentant tout d'abord d'expliquer les raisons de cette dégradation des performances acoustiques et en proposant quelques solutions qui permettent d'y remédier.

La Demanderesse a émis l'hypothèse que la dégradation est due principalement au fait que les panneaux isolants adhèrent à la dalle de béton. Cette adhérence s'explique par la laitance de béton qui a coulé dans les jointures entre les dalles et forme des ponts, mais surtout par la nature fibreuse des panneaux qui favorise l'imprégnation du béton dans les pores se trouvant en surface.

On a donc été amené à mettre en cause les calculs théoriques considérés, jusqu'ici, comme étant indiscutables ainsi que les idées préconçues qui prévalaient dans la profession sur la prétendue amélioration de l'indice d'affaiblissement avec des panneaux isolants et elle a procédé à des essais complémentaires en laboratoire. On a mesuré le coefficient d'absorption acoustique au tube de Kundt d'un échantillon de panneaux en laine de roche de 50 x 50 cm noyé sur toute son épaisseur dans un bloc de béton de 22 cm d'épaisseur, donc dans des conditions similaires à celles de la pratique. On rappelle qu'un tube de Kundt permet de mesurer le coefficient d'absorption acoustique. Pour cela, l'échantillon est placé à une extrémité du tube et, à partir de l'autre extrémité, on envoie une onde acoustique en direction de l'échantillon. Le coefficient d'absorption se déduit de l'intensité de l'onde incidente et de celle de l'onde qui s'est réfléchie sur l'échantillon.

En faisant les mesures dans la gamme de fréquences comprises entre 100 et 4000 Hz, on a obtenu une courbe de variation présentant un creux brusque à une fréquence de 450 Hz environ. Ce creux correspond à une détérioration de l'isolation acoustique due au fait que la dalle en béton entre en résonance acoustique et entraîne avec elle en vibration les panneaux qui y adhèrent.

On a donc tenté d'éliminer ce phénomène de résonance en désolidarisant les panneau de la dalle. Pour cela, la Demanderesse a refait les mêmes essais au tube de Kundt avec un échantillon ayant la même structure que le précédent, mais comportant un voile en fibres de verre interposé entre le béton et le panneau en matériau isolant. Toutefois, elle a constaté que l'amélioration n'était que très peu sensible, le phénomène de résonance n'ayant pas disparu. En effet, le voile étant extrêmement poreux, le béton arrive à la traverser et à adhérer à la face sous-jacente du panneau isolant.

Antérieurement, on trouve dans le document FR-A-2 505 906 l'utilisation d'un film disposé sur des plaques non fibreuses servant de support dans la fabrication de plancher sur vide sanitaire par coulage d'une dalle de béton, ce film facilitant la réalisation de la dalle.

La présente invention a pour objet un procédé d'isolation en sous-face de plafond, notamment de plafond de cave ou de parking situés sous des locaux d'habitation ou d'activités tertiaires, et qui présente en plus des qualités d'isolation thermique, de résistance au feu et de compressibilité des modes d'isolation connus, une isolation phonique améliorée par rapport à celle d'une dalle en béton seule, procédé dans lequel des panneaux jointifs en un matériau poreux, incombustible, non hydrophile et bon isolant thermique et phonique, par exemple en laine de roche et en laine de verre, sont accrochés à la face inférieure d'une dalle de béton formant ledit plafond à l'aide de moyens d'ancrage appropriés, et étant caractérisée en ce qu'entre la dalle de béton et les panneaux est interposée au moins une couche intermédiaire en une matière étanche vis-à-vis de l'eau et qui recouvre toute la surface des panneaux sans avoir de liaison mécanique avec ces derniers.

Lors du coulage de la dalle en béton, ladite couche intermédiaire empêche l'infiltration du béton jusqu'aux panneaux isolants de sorte que ces derniers n'adhèrent pas à la dalle.

La couche intermédiaire est constituée par un film réalisé en toute matière étanche a l'eau, par exemple en métal, tel qu'une feuille d'aluminium, ou en matière synthétique, telle que polyéthylène ou polychlorure de vinyle.

Dans le mode de réalisation précédent, le revêtement isolant est désolidarisé de la dalle en béton et ne vibre donc pas avec elle. L'indice d'affaiblissement acoustique de l'ensemble dalle-couche intermédiaire et revêtement est, dans les conditions expérimentales, de 63 dB(A), donc supérieur à 3 dB(A) à l'indice de la dalle de béton seule.

Bien entendu, on peut interposer entre la dalle en béton et les panneaux isolants plusieurs couches intermédiaires superposées.

L'invention sera décrite à présent en regard des dessins annexés donnés à titre d'exemples non limitatifs et dans lesquels :
· la figure 1 est une vue, en coupe verticale, illustrant le mode de construction d'un plafond selon l'invention, la couche intermédiaire étant constituée par un film étanche,
· la figure 2 représente un détail de la figure 1 après le retrait des étais et du coffrage,
· la figure 4 est une vue analogue à la figure 2 d'un autre mode de réalisation de plafond avec revêtement,
· la figure 5 montre, sur un même graphique, les courbes d'affaiblissement acoustique en fonction de la fréquence, respectivement à travers une dalle en béton seule, à travers la même dalle recouverte d'un revêtement selon la technique traditionnelle en panneaux isolants et à travers ladite dalle isolée par des panneaux isolants et une couche intermédiaire étanche selon l'invention.

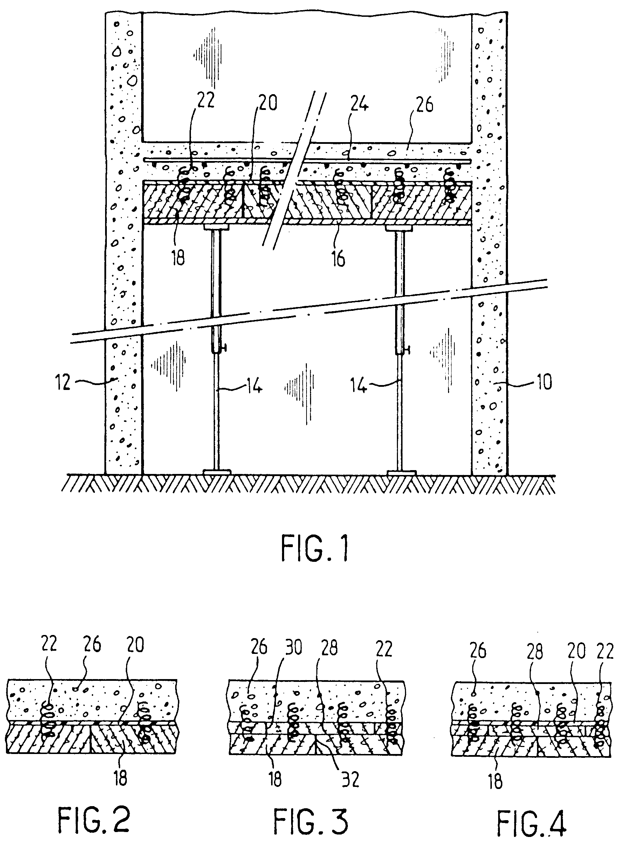

Avec référence à la figure 1, le mode de construction d'un plafond séparant un local en sous-sol d'immeuble, tel qu'une cave ou un parking, situé sous un local habité, est le suivant :
après avoir érigé les murs 10, 12 jusqu'au niveau du premier étage, on dresse des étais télescopiques 14 sur lesquels on pose un coffrage démontable 16 en métal ou en contre-plaqué allant d'un mur à l'autre. Dans le coffrage, on pose bord à bord des panneaux 18 en laine de roche ou de verre ou en toute autre matière incombustible, non hydrophile et ayant de bonnes performances d'isolant thermique et acoustique.

Conformément à l'invention, on étale sur la surface supérieure des panneaux 18 une couche de matière étanche qui, dans l'exemple des figures 1 et 2, est constituée par un film 20 qui peut être soit en métal, par exemple en aluminium, soit en matière synthétique, par exemple en polyéthylène ou en polychlorure de vinyle.

A travers le film 20, on visse dans les panneaux une pluralité d'éléments d'ancrage 22 en forme de tire-bouchons uniformément répartis, par exemple en raison de neuf par mètre carré, les queues de ces éléments restant saillantes au-dessus des panneaux.

On pose ensuite une armature métallique 24 au-dessus du film étanche 20 et l'on coule la dalle de béton 26 sur une épaisseur qui est généralement de 22 cm. La dalle s'étale sur le film et noie dans son épaisseur l'armature 24 ainsi que les queues des éléments d'ancrage 22.

Une fois que la dalle en béton a séché, on retire les étais 14 et le coffrage 16. Les panneaux 18 restent accrochés à la dalle en béton par les éléments d'ancrage, mais ils n'adhèrent pas à ladite dalle puisque le film étanche les en sépare.

Le film peut s'étendre sur toute la surface des panneaux, mais il peut également être constitué de plusieurs feuilles qui recouvrent chacune un panneau en débordant de quelques centimètres au-delà des bords afin d'empêcher toute infiltration de béton dans les panneaux.

Dans la variante de réalisation de la figure 3, la couche intermédiaire est constituée par des plaques étanches 28, par exemple de même nature que les panneaux 18, mais ayant toutefois une épaisseur inférieure. Les plaques sont disposées de manière que leurs jointures 30 ne coïncident pas avec celles 32 des panneaux. Les éléments d'ancrage 22 sont plantés à travers les plaques et les panneaux. Lors du coulage de la dalle 26, le béton ne pourra pas s'infiltrer jusqu'aux panneaux 18 puisqu'il sera arrêté par les plaques 28. Les ponts de béton s'établissant dans les jointures 30 entre la dalle 26 et les panneaux 18 sont trop faibles pour solidariser ces derniers à la dalle.

La solution illustrée dans la figure 4 constitue un panachage des deux solutions précédentes, puisqu'entre la dalle de béton 26 et les panneaux 18 sont interposés à la fois une couche de plaques 28 et un film étanche 20, ces deux éléments pouvant être disposés dans l'ordre montré sur la figure 4 ou dans l'ordre inverse.

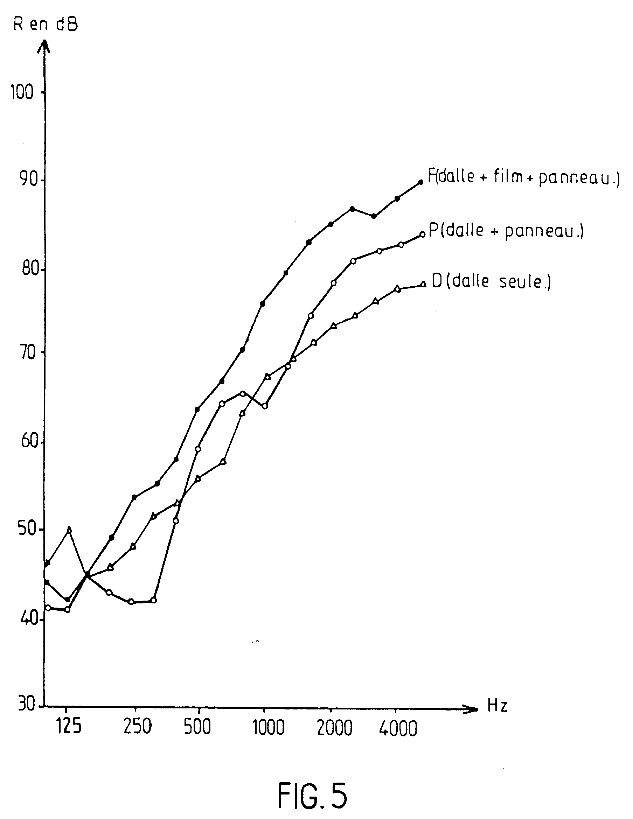

La figure 5 représente par des points triangulaires la courbe d'affaiblissement acoustique D de la dalle 26 seule, dans le sens bas vers le haut, par des ronds blancs la courbe d'affaiblissement P de la même dalle revêtue en sous-face par des panneaux adhérant à la dalle, et par des ronds noirs la courbe d'affaiblissement F dans le cas où l'on interpose un film étanche entre la dalle et les panneaux.

La comparaison entre les courbes D et P montre, qu'à l'exception de faibles plages de fréquences, l'affaiblissement acoustique du plancher revêtu de panneaux s'est dégradé. L'indice d'affaiblissement calculé par la méthode de pondération, signalée précédemment, est de 60 dB(A) dans le cas de la courbe D et de 55 dB(A) dans le cas de la courbe P.

Par contre, la figure 5 montre que la courbe F, qui correspond au produit selon l'invention, est nettement au-dessous de la courbe D pratiquement sur toutes les fréquences. L'indice d'affaiblissement est de 63 dB(A).

Le revêtement isolant selon l'invention permet donc d'obtenir un gain d'affaiblissement de 3 dB(A), ce qui est très important.

## Revendications

1. Procédé d'isolation en sous-face de plafond, notamment de plafond de cave ou de parking situés sous des locaux d'habitation ou d'activités tertiaires, dans lequel des panneaux jointifs (18) en laine de roche ou de verre sont accrochés à la face inférieure d'une dalle de béton (26) formant ledit plafond à l'aide de moyens d'ancrage (22) appropriés, dans lequel un coffrage (16) est construit, des panneaux jointifs (18) sont posés en fond de coffrage, une ou des couches intermédiaires étanches à l'eau constituées par une feuille étanche (20), est étalée sur la surface supérieure desdits panneaux, des éléments d'ancrage (22) sont fixés en les plantant dans les panneaux à travers la feuille étanche, une armature métallique (24) est mise en place, puis la dalle en béton (26) est coulée noyant les extrémités des éléments d'ancrage et l'armature métallique.

2. Procédé d'isolation en sous-face de plafond selon la revendication 1, caractérisée en ce que la couche intermédiaire est constituée par une feuille (20) réalisée en toute matière étanche à l'eau, par exemple en métal, tel qu'une feuille d'aluminium, ou en matière synthétique, tel que polyéthylène ou polychlorure de vinyle.

3. Procédé d'isolation en sous-plafond selon l'une des revendications précédentes, caractérisée en ce qu'entre la dalle en béton (26) et les panneaux isolants (18) sont interposées plusieurs couches intermédiaires superposées.

## Claims

1. Process for insulating the soffit of ceilings, in particular ceilings of cellars or car parks located below residential premises or premises for tertiary activities, in which contiguous panels (18) made of rock wool or glass wool are attached to the lower face of a concrete slab (26) forming the ceiling by means of suitable anchorage means (22), in which a formwork (16) is constructed, contiguous panels (18) are positioned in the base of the formwork, one or more waterproof intermediate layers consisting of a waterproof sheet (20) is/are spread over the upper surface of the panels, anchorage components (22) are secured by planting them in the panels through the waterproof sheet, a metal reinforcement (24) is positioned, then the concrete slab (26) is cast, embedding the ends of the anchorage components and the metal reinforcement.

2. Process for insulating the soffit of ceilings according to Claim 1, characterised in that the intermediate layer consists of a sheet (20) made of any waterproof material, for example metal, such as an aluminium foil, or of synthetic material such as polyethylene or polyvinyl chloride.

3. Process for insulating the soffit of ceilings according to any one of the preceding claims, characterised in that a plurality of intermediate superimposed layers is positioned between the concrete slab (26) and the insulating panels (18).

## Patentansprüche

1. Verfahren zur unterseitigen Isolation einer Decke, insbesondere der Decke eines Kellers oder einer Tiefgarage, die sich unter Wohn- oder Geschäftsräumen befinden, in welchem aneinanderstoßende Tafeln (18) aus Stein- oder Glaswolle mittels geeigneter Verankerungsmittel (22) an der Unterseite einer diese Decke bildenden Betonplatte (26) befestigt werden, eine Verschalung (16) aufgebaut wird, die aneinanderstoßende Tafeln (18) auf den Boden dieser Verschalung gelegt werden, eine oder mehrere aus einer Dichtfolie (20) gebildeten wasserdichten Zwischenschichten auf die Oberseite dieser Tafeln gelegt wird/werden, die Verankerungselemente (22) unter Durchstoßen der Dichtfolie in den Tafeln befestigt werden, eine Metallbewehrung (24) angebracht und anschließend die Betonplatte (26) gegossen wird, welche die Enden der Verankerungselemente und die Metallbewehrung umhüllt.

2. Verfahren zur unterseitigen Isolation einer Decke nach Anspruch 1, **dadurch gekennzeichnet, daß** die Zwischenschicht aus einer Folie (20) gebildet ist, die aus vollständig wasserdichtem Material, beispielsweise aus Metall, wie einer Aluminiumfolie, oder aus synthetischem Material, wie Polyethylen oder Polyvinylchlorid, hergestellt ist.

3. Verfahren zur unterseitigen Isolation einer Decke nach einem der vorhergehenden Ansprüche, **dadurch gekennzeichnet, daß** zwischen die Betonplatte (26) und die Isoliertafeln (18) mehrere übereinanderliegende Zwischenschichten eingelegt sind.
